# EUROPÄISCHE PATENTSCHRIFT

(11) **EP 2 233 106 B1**
(45) Veröffentlichungstag und Bekanntmachung des Hinweises auf die Patenterteilung: **20.04.2016**
(21) Anmeldenummer: 10001753.2
(22) Anmeldetag: 22.02.2010
(51) Int. Cl.: A61C 5/06

(54) **Auftrageinstrument für Dentalmassen**
Holder instrument for dental masses
Instrument d'application pour masses dentaires

(30) Priorität: 23.03.2009 DE 102009014446
(43) Veröffentlichungstag der Anmeldung: 29.09.2010
(73) Patentinhaber: Gilltec GmbH, 24149 Kiel (DE)
(72) Erfinder: Fritze, Joachim, Dr., 24576 Bad Bramstedt (DE); Heinz, Jochen, Dr., 24220 Flintbek (DE); Rolle, Philipp, 24536 Neumünster (DE)
(74) Vertreter: Glawe, Delfs, Moll

(56) Entgegenhaltungen:
- DE-A1- 19 934 235
- US-A1- 2004 031 114
- US-A1- 2004 197 730

## Beschreibung

Die Erfindung betrifft ein Auftrageinstrument zum Auftragen von Dentalmassen. Das Auftrageinstrument umfasst einen Instrumentenkopf mit einer Tragestruktur und einer Mehrzahl von an der Tragestruktur ausgebildeten Vorsprüngen. Die Vorsprünge sind elastisch und haben bezogen auf eine Höhenausdehnung eine geringere Steifigkeit als die Tragestruktur. Die Vorsprünge schließen einen Aufnahmeraum für die Dentalmasse zwischen sich ein.

Klassische Instrumente zum Auftragen von Dentalmassen auf eine zu behandelnde Fläche haben die Gestalt eines Pinsels. An einem Instrumentenkopf ist eine Vielzahl von Borsten befestigt, die so eng nebeneinander stehen, dass sie die Dentalmasse zwischen sich halten können. Der Instrumentenkopf wird in einen Behälter mit der Dentalmasse eingetaucht, so dass die Borsten die Dentalmasse aufnehmen können. Auf der zu behandelnden Fläche wird die Dentalmasse aus dem Auftrageinstrument ausgedrückt und auf der zu behandelnden Fläche, beispielsweise einer Bohrung eines Zahns, verteilt. Bei Pinseln dieser Art werden die Borsten in einem separaten Fertigungsschritt an dem Instrumentenkopf angebracht. Sie sind deswegen vergleichsweise teuer in der Herstellung und können nicht unbegrenzt miniaturisiert werden. Für die heute übliche minimalinvasive Behandlung von Zähnen sind klassische Pinsel häufig zu groß.

Weit verbreitet sind inzwischen so genannte Microbrushes wie in US 2004/0031114 offenbart, bei denen das vordere Ende mit im Wesentlichen radial ausgerichteten Fasern beklebt ist. Die Fasern sind sehr dünn und haben eine geringe Eigenstabilität. Dies hat zur Folge, dass bezogen auf das Volumen des Instrumentenkopfs eine große Menge an Dentalmasse aufgenommen werden kann und dass die Dentalmasse leicht aus den Fasern herausgedrückt werden kann. Allerdings ist es nicht ganz leicht, die ausgebrachte Dentalmasse auf der zu behandelnden Fläche zu verteilen, weil jedes Hin- und Herstreichen mit dem Microbrush dazu führt, dass weitere Mengen an Dentalmasse aus dem Microbrush austreten und auf die Fläche aufgebracht werden. Aus dem gleichen Grund ist es nicht einfach, eine präzise dosierte Menge an Dentalmasse auf die Fläche aufzubringen.

Der Erfindung liegt die Aufgabe zu Grunde, ein technisch verbessertes Auftrageinstrument vorzustellen, das insbesondere bedienungsfreundlicher ist. Ausgehend vom eingangs genannten Stand der Technik wird die Aufgabe gelöst durch die Merkmale des Anspruchs 1. Vorteilhafte Ausführungsformen finden sich in den Unteransprüchen. Erfindungsgemäß haben die Vorsprünge eine flächige Gestalt und sind bezogen auf eine Breitenausdehnung im Wesentlichen parallel zueinander angeordnet. Der größte Durchmesser des Instrumentenkopfs liegt vorzugsweise zwischen 2 mm und 3 mm.

Zunächst werden einige Begriffe erläutert. Die Höhenausdehnung eines Vorsprungs bezeichnet die Richtung, in der sich die Vorsprünge von der Tragestruktur weg erstrecken. Die Breitenausdehnung erstreckt sich senkrecht dazu. Die Vorsprünge haben dann eine geringere Steifigkeit als die Tragestruktur, wenn über die Tragestruktur eine Kraft auf die Vorsprünge ausgeübt werden kann, so dass sich die Vorsprünge bezogen auf ihre Höhenausdehnung verformen. Angaben zum Durchmesser des Instrumentenkopfs beziehen sich auf einen Durchmesser, der quer zur Längsrichtung des Instrumentenkopfs ausgerichtet ist.

Ein Aufnahmeraum im Sinne der Erfindung ist zu zwei Seiten hin durch Flächen der Vorsprünge begrenzt. Von einer Mehrzahl Vorsprünge wird in diesem Zusammenhang auch dann gesprochen, wenn die Flächen der beiden Vorsprünge durch ein beispielsweise spiralförmiges Zwischenstück verbunden sind. Zwischen den Vorsprüngen gibt es Austrittsbereiche, in denen der Aufnahmeraum ohne weitere Abgrenzung in die Umgebung übergeht. Bei geeigneter Verformung der flächigen Vorsprünge vermindert sich das Volumen des Aufnahmeraums und in dem Aufnahmeraum enthaltene Dentalmasse tritt über die Austrittsbereiche aus dem Aufnahmeraum aus.

Wenn das erfindungsgemäße Auftrageinstrument in eine Dentalmasse eingetaucht wird, füllt sich der Aufnahmeraum mit der Dentalmasse. Der Aufnahmeraum ist so bemessen und auf die Dentalmasse abgestimmt, dass die Dentalmasse im Aufnahmeraum bleibt, wenn das Auftrageinstrument wieder aus der Dentalmasse auftaucht. Auf der zu behandelnden Fläche wird über die Tragestruktur Druck auf die flächigen Vorsprünge ausgeübt, so dass die flächigen Vorsprünge sich verformen und das Volumen des Aufnahmeraums sich vermindert. Die Dentalmasse tritt aus dem Aufnahmeraum aus und haftet auf der betreffenden Stelle der zu behandelnden Fläche. Da die geometrische Form des Aufnahmeraums bekannt ist und eine genau definierte Verformung stattfindet, kann die auszubringende Dentalmasse präzise dosiert werden. Nachdem die Vorsprünge wieder entlastet sind und ihre ursprüngliche Form eingenommen haben, werden die Vorsprünge genutzt, um die Dentalmasse auf der Fläche zu verteilen. Die Vorsprünge haben eine ausreichende Steifigkeit, so dass die Dentalmasse auf der Fläche verteilt werden kann, ohne dass weitere Dentalmasse aus dem Aufnahmeraum austritt. Das Auftrageinstrument hat dadurch eine hohe Bedienfreundlichkeit.

In seiner einfachsten Ausführungsform hat das erfindungsgemäße Auftrageinstrument lediglich zwei Vorsprünge und einen zwischen den Vorsprüngen angeordneten Aufnahmeraum. Eine gleichmäßigere Verteilung der Dentalmasse wird möglich durch mehrere nebeneinander angeordnete Aufnahmeräume. Dazu werden mehr als zwei flächige Vorsprünge im Wesentlichen parallel zueinander angeordnet, so dass ein mittlerer flächiger Vorsprung zwei benachbarte Aufnahmeräume voneinander trennt. Vorzugsweise ist der Abstand zwischen zwei flächigen Vorsprüngen kleiner als die größte Höhenausdehnung der Vorsprünge. Die Vorsprünge können dann so verformt werden, dass sie direkt aufeinanderliegen. Das Volumen des Aufnahmeraums reduziert sich bis nahe null und die Dentalmasse kann nahezu vollständig aus dem Aufnahmeraum herausgebracht und auf die Fläche aufgebracht werden.

Vorzugsweise umfasst das erfindungsgemäße Auftrageinstrument einen Schaft, dessen proximales Ende als Griffteil ausgebildet ist. Das distale Ende des Schafts ist fest oder lösbar mit dem Instrumentenkopf verbunden. Der Schaft und die Verbindung mit dem Instrumentenkopf sind so stabil, dass eine zum Verformen der flächigen Vorsprünge ausreichende Kraft auf den Instrumentenkopf übertragen werden kann.

In einer Ausführungsform erstreckt sich die Höhenausdehnung der flächigen Vorsprünge im Wesentlichen in Verlängerung des Schafts. Die Dentalmasse kann dann durch Druck in Längsrichtung des Schafts aus dem Aufnahmeraum herausgedrückt werden und durch Bewegungen in Querrichtung dazu auf der Fläche verteilt werden.

Bei anderen Ausführungsformen erstreckt sich die Höhenausdehnung der flächigen Vorsprünge im Wesentlichen radial bezogen auf die Richtung des Schafts. Dabei kann die Breitenausdehnung der Vorsprünge im Wesentlichen quer oder im Wesentlichen parallel zur Richtung des Schafts ausgerichtet sein.

Das erfindungsgemäße Auftrageinstrument soll insbesondere dazu dienen, Dentalmassen in zu füllenden Löchern von Zähnen aufzubringen. Dazu ist der größte Durchmesser des Instrumentenkopfs zwichen 2 mm und 3 mm. Ferner ist es hilfreich, wenn der Instrumentenkopf in seiner Kontur an die Form des Lochs angepasst ist. Insbesondere kann der Instrumentenkopf eine kugelförmige Kontur haben oder eine zylinderförmige Kontur, bei der die Achse im Wesentlichen parallel zur Richtung des Schafts ausgerichtet ist. Dies kann erreicht werden, wenn das Auftrageinstrument die folgenden Merkmale entweder einzeln oder in Kombination aufweist. Die Tragestruktur kann eine flächige Gestalt haben und damit eine Fläche bieten, entlang der die Vorsprünge bezogen auf ihre Breitenausdehnung quer zur Richtung des Schafts ausgerichtet sein können. Es können ein erster Satz und ein zweiter Satz von Vorsprüngen vorgesehen sein, die auf gegenüberliegenden Seiten der flächigen Tragestruktur angeordnet sind. Die Vorsprünge können sich bezogen auf ihre Höhenausdehnung im Wesentlichen senkrecht zur Fläche der Tragestruktur erstrecken. Die flächige Form der Tragestruktur kann an eine Kreisform angenähert sein. Im Zentrum der Tragestruktur können Vorsprünge ausgebildet sein, die eine größere Höhenausdehnung haben als Vorsprünge am Rand der Tragestruktur. Die Kontur der Vorsprünge kann an die Form eines Kreissegments angenähert sein.

Es ist erwünscht, dass bezogen auf die Größe des Instrumentenkopfs möglichst viel Dentalmasse aufgenommen und in dem Zahn ausgebracht werden kann. Bezogen auf das von dem Instrumentenkopf aufgespannte Volumen nehmen die Aufnahmeräume vorzugsweise mindestens 40%, weiter vorzugsweise mindestens 60% ein. Das Volumen der Vorsprünge ist vorzugsweise klein verglichen mit dem Volumen der Aufnahmeräume. Der Abstand zweier Vorsprünge, die einen Aufnahmeraum zwischen sich einschließen, ist vorzugsweise größer als die Materialstärke der Vorsprünge.

Großvolumige Aufnahmeräume können insbesondere dadurch erreicht werden, dass die Vorsprünge, die den Aufnahmeraum zwischen sich einschließen, einen großen Abstand zueinander haben. Wird allerdings der Abstand der Vorsprünge zueinander zu groß, so besteht die Gefahr, dass die Dentalmasse nicht mehr sicher im Aufnahmeraum gehalten wird. Um der Dentalmasse mehr Halt zu geben, können ein erster Aufnahmeraum und ein zweiter Aufnahmeraum derart zueinander versetzt angeordnet sein, dass ein Vorsprung des ersten Aufnahmeraums in der seitlichen Verlängerung des zweiten Aufnahmeraums angeordnet ist und so dazu beiträgt, die Dentalmasse im zweiten Aufnahmeraum sicher zu halten.

Betrachtet man die Projektion der Vorsprünge des ersten und des zweiten Aufnahmeraums so können die Vorsprünge des ersten Aufnahmeraums einen seitlichen Abstand zu den Vorsprüngen des zweiten Aufnahmeraums haben. Damit die Dentalmasse vollständig aus dem Instrumentenkopf ausgebracht werden kann, ist es jedoch vorzuziehen, wenn in der Projektion die Vorsprünge des ersten Aufnahmeraums mit den Vorsprüngen des zweiten Aufnahmeraums abschließen.

Um den Halt der Dentalmasse weiter zu verbessern, kann innerhalb eines Aufnahmeraums ein Zwischenvorsprung angeordnet sein, dessen Flächenausdehnung klein ist verglichen mit der Flächenausdehnung benachbarter Vorsprünge. Wenn der Zwischenvorsprung in radialer Richtung weiter vorspringt als benachbarte Vorsprünge, kann er gut dazu genutzt werden, bereits aus den Aufnahmeräumen ausgebrachte Dentalmasse auf einer Fläche zu verteilen. Wenn die Aufnahmeräume sich in Summe rundherum um eine zentrale Tragestruktur erstrecken, kann durch Drehen des Auftrageinstruments beeinflusst werden, ob weitere Dentalmasse ausgebracht werden soll oder die bereits ausgebrachte Dentalmasse verteilt werden soll.

Die Dentalmasse soll auch dann gut in dem Auftrageinstrument gehalten werden, wenn das Auftrageinstrument schnell bewegt wird. Bei schnellen Bewegungen des Auftrageinstruments kann es insbesondere vorkommen, dass Fliehkräfte auf die Dentalmasse wirken, die in Richtung des distalen Endes des Auftrageinstruments gerichtet sind. Unter dem Einfluss einer solchen Fliehkraft wird die Dentalmasse besser in dem Auftrageinstrument gehalten, wenn die Vorsprünge bezogen auf ihre Breitenausdehnung eine zum distalen Ende gerichtete Wölbung aufweisen.

Allgemein können Wölbungen in der Höhenausdehnung oder der Breitenausdehnung dazu beitragen, den flächigen Vorsprüngen eine größere Stabilität zu verleihen. Dies kann dann hilfreich sein, wenn die vollständig ebenen Vorsprünge sich zu leicht verformen lassen und eine größere Steifigkeit erwünscht ist, um die Dentalmasse dosiert aus dem Aufnahmeraum ausgeben zu können.

Der Schaft kann eine oder mehrere Knickstellen aufweisen. Häufig ist es im geraden Zustand des Schafts einfacher, Dentalmasse aus einem Behälter zu entnehmen, während es im abgeknickten Zustand einfacher ist, ein Loch in einem Zahn zu behandeln. Vorzugsweise kann die Gestalt des Schafts über die Knickstellen plastisch verändert werden.

Das erfindungsgemäße Auftrageinstrument kann - beispielsweise als Spritzgussteil - einstückig aus einem einzigen Material gefertigt sein. Die Eigenschaft, dass die Steifigkeit der Vorsprünge kleiner ist als die Steifigkeit der Tragestruktur, wird dann dadurch erreicht, dass die Materialstärke der Tragestruktur größer gewählt wird als die Materialstärke der Vorsprünge. Alternativ kann das Auftrageinstrument auch aus mehr als einem Material aufgebaut sein. Beispielsweise kann die Tragestruktur aus einem Material mit höherer Steifigkeit und die Vorsprünge aus einem Material mit geringerer Steifigkeit bestehen. Vorteilhaft ist es, wenn die Materialien stoffschlüssig miteinander verbunden sind, wie es beispielsweise bei einer Herstellung durch Mehrkomponenten-Spritzguss erreicht werden kann. Eine solche Stoffschlüssige Verbindung ist widerstandsfähiger als eine beispielsweise durch Kleber erreichte adhäsive Verbindung.

Eine widerstandsfähige Materialverbindung ist besonders dann von Bedeutung, wenn der Instrumentenkopf für eine längere Zeitdauer in die Dentalmasse eingetaucht werden soll. Die Dentalmassen enthalten nämlich häufig aggressive Bestandteile, durch die adhäsive Verbindungen aufgelöst werden können. Das erfindungsgemäße Auftrageinstrument kann als Auftrageeinheit zusammen mit einem Behälter, in dem die Dentalmasse enthalten ist, vorliegen. Das Auftrageinstrument ist dann so mit dem Behälter verbunden, dass der Instrumentenkopf in dem Behälter angeordnet ist und in die Dentalmasse eingetaucht ist. Nach dem öffnen des Behälters ist das Auftrageinstrument frei und kann herausgenommen werden. Mit klassischen Pinseln oder Microbrushes, bei denen die Vorsprünge adhäsiv mit der Tragestruktur verbunden sind, ist dies nicht möglich, weil die adhäsive Verbindung sich unter dem Einfluss der aggressiven Dentalmasse auflösen kann.

Die Erfindung wird nachfolgend unter Bezugnahme auf die beigefügten Zeichnungen anhand einer vorteilhaften Ausführungsform beispielhaft beschrieben. Es zeigen:
- Figuren 1 bis 3:: verschiedene Ansichten einer ersten Ausführungsform eines erfindungsgemäßen Auftrageinstruments;
- Fig. 4:: das Auftrageinstrument der Figuren 1 bis 3 mit verformten Vorsprüngen;
- Fig. 5:: eine perspektivische Ansicht einer weiteren Ausführungsform eines erfindungsgemäßen Auftrageinstruments;
- Figuren 6 bis 11:: verschiedene Ausführungsformen erfindungsgemäßer Auftrageinstrumente in einer Seitenansicht (A) und einer Ansicht in Axialrichtung (B) ;
- Fig. 12:: eine Auftrageeinheit aus einem erfindungsgemäßen Auftrageinstrument und einem mit einer Dentalmasse gefüllten Behälter;
- Fig. 13 bis 15:: verschiedene Ansichten einer weiteren Ausführungsform der Erfindung; und
- Fig. 16 bis 18:: verschiedene Ansichten einer weiteren Ausführungsform der Erfindung.

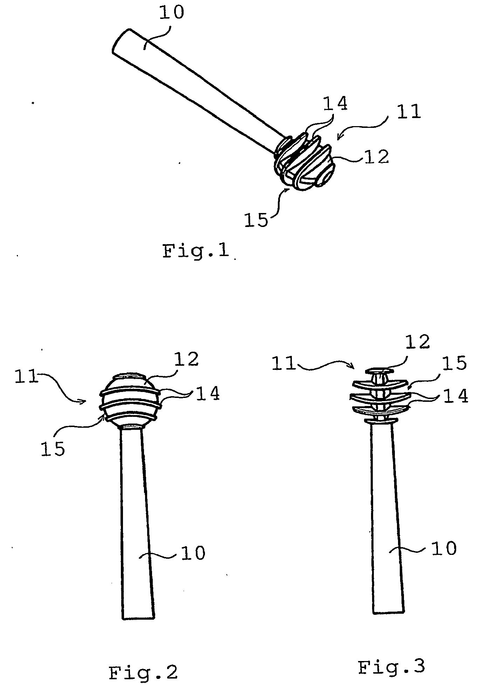

Ein in den Figuren 1 bis 3 gezeigtes Auftrageinstrument umfasst einen Schaft 10 und einen Instrumentenkopf 11, der mit dem distalen Ende des Schafts 10 verbunden ist. Der Instrumentenkopf 11 umfasst eine flächige Tragestruktur 12, die eine kreisförmige Kontur hat. Auf jeder der beiden Seiten der Tragestruktur 12 sind fünf flächige Vorsprünge 14 ausgebildet. Die Vorsprünge 14 haben eine Höhenausdehnung und eine Breitenausdehnung. In der Höhe erstrecken sich die Vorsprünge 14 senkrecht über der Tragestruktur 12. Die Breitenausdehnung der Vorsprünge 14 ist quer zur Richtung des Schafts 10 ausgerichtet. Die im Zentrum der Tragestruktur 12 angeordneten Vorsprünge 14 haben eine größere Höhe, zum Rand der Tragestruktur 12 hin wird die Höhe der Vorsprünge 14 geringer. Jeder der Vorsprünge 14 hat in seiner Kontur die Form eines Halbkreises, zwei gegenüberliegende Vorsprünge 14 ergänzen sich in der Kontur zu einem Vollkreis. Insgesamt bilden die Tragestruktur 12 und die Vorsprünge 14 in der Kontur eine Kugelform. Die Vorsprünge 14 haben eine zum distalen Ende des Auftrageinstruments hin gerichtete Wölbung, die sich über die Breite der Vorsprünge 14 erstreckt. Der größte Durchmesser des Instrumentenkopfs 11 liegt zwischen 2 mm und 3 mm. Das Auftrageinstrument ist damit zur Behandlung von kleinen Bohrungen in Zähnen geeignet.

Die flächigen Vorsprünge 14 sind im Wesentlichen parallel zueinander angeordnet. Jeweils zwei benachbarte Vorsprünge 14 schließen zwischen sich einen Aufnahmeraum 15 ein. Die Aufnahmeräume 15 sind zu zwei gegenüberliegenden Seiten hin durch die Vorsprünge 14 und darüber hinaus durch die Tragestruktur 12 begrenzt. In den übrigen Richtungen gehen die Aufnahmeräume 15 ohne Abgrenzung in die Umgebung über.

Das Auftrageinstrument ist als Mehrkomponenten-Spritzgussteil hergestellt. Der Schaft 10 und die Tragestruktur 12 bestehen aus einem ersten Material mit höherer Steifigkeit, die Vorsprünge 14 bestehen aus einem zweiten Material, das stoffschlüssig mit der Tragestruktur 12 verbunden ist und das eine geringere Steifigkeit, also eine größere Flexibilität hat.

Das Auftrageinstrument ist dazu bestimmt, Dentalmassen aus einem Vorratsbehälter aufzunehmen und in einer Bohrung eines Zahns aufzutragen. Der Begriff Dentalmasse umfasst hier insbesondere dentale Kleber, Dichtmittel, Grundiermittel und Ätzmittel. Der Instrumentenkopf 11 des Auftrageinstruments wird in dem Vorratsbehälter in die Dentalmasse eingetaucht, so dass sich die Aufnahmeräume 15 mit der Dentalmasse füllen. Die Größe der Vorsprünge 14 und der Abstand der Vorsprünge 14 zueinander sind auf die Eigenschaften der Dentalmasse abgestimmt. Bei einer dünnflüssigen Dentalmasse haben die Vorsprünge 14 einen geringeren Abstand zueinander, damit sie die Dentalmasse in den Aufnahmeräumen 15 halten können, bei zähflüssigen Dentalmassen ist der Abstand zwischen den Vorsprüngen 14 größer.

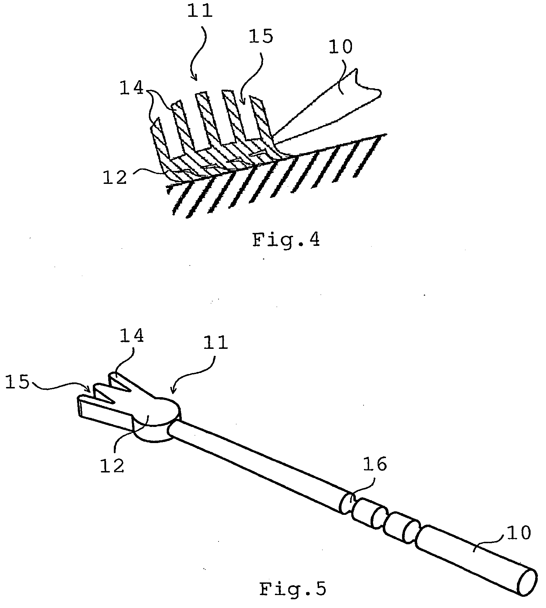

Wenn die Aufnahmeräume 15 mit der Dentalmasse gefüllt sind, wird der Instrumentenkopf 11 aus dem Vorratsbehälter herausgehoben und zu dem Zahn mit der Bohrung geführt. Durch die Wölbung der Vorsprünge 14 wird die Dentalmasse auch dann in den Aufnahmeräumen 15 gehalten, wenn der Instrumentenkopf 12 mit einer schnellen Bewegung geführt wird. In dem Zahn soll die Dentalmasse in erster Linie auf die Wand der Bohrung aufgetragen werden. Das Auftrageinstrument wird dazu zunächst mit den Vorsprüngen 14 an die Wand der Bohrung angelegt. Dann wird über die Tragestruktur 12 Druck ausgeübt, so dass die Vorsprünge 14 sich wie in Fig. 4 gezeigt verformen. Durch die Verformung der Vorsprünge 14 verringert sich das Volumen der Aufnahmeräume 15 und die Dentalmasse tritt aus den Aufnahmeräumen 15 aus. Durch Hin- und Herstreichen kann die zunächst nur lokal aufgebrachte Dentalmasse auf der Fläche verteilt werden. Die Vorsprünge haben eine hinreichende Steifigkeit, dass die Dentalmasse auf der Fläche verteilt werden kann, ohne dass dies automatisch mit dem Auftrag von zusätzlichen Mengen Dentalmasse verbunden ist.

Die in Fig. 5 gezeigte Ausführungsform eines erfindungsgemäßen Auftrageinstruments umfasst drei Vorsprünge 14 und zwei dazwischen liegende Aufnahmeräume 15. Der Schaft 10 ist durch Mulden 16 als Griffteil gestaltet. Die Höhenausdehnung der Vorsprünge 14 erstreckt sich in Verlängerung des Schafts 10, die Breitenausdehnung erstreckt sich quer zur Richtung des Schafts 10. Die Vorsprünge 14 stehen bezogen auf ihre Breitenausdehnung parallel zueinander und schließen bezogen auf ihre Höhenausdehnung einen leichten Winkel ein. Die Aufnahmeräume 15 haben dadurch im Querschnitt eine leichte V-Form. Das Auftrageinstrument ist dazu geeignet, Dentalmassen auf die Stirnfläche einer Bohrung aufzubringen. Die Dentalmasse kann durch Druck in Richtung des Schafts 10 aus den Aufnahmeräumen 15 ausgebracht werden und durch Bewegungen in Querrichtung dazu verteilt werden.

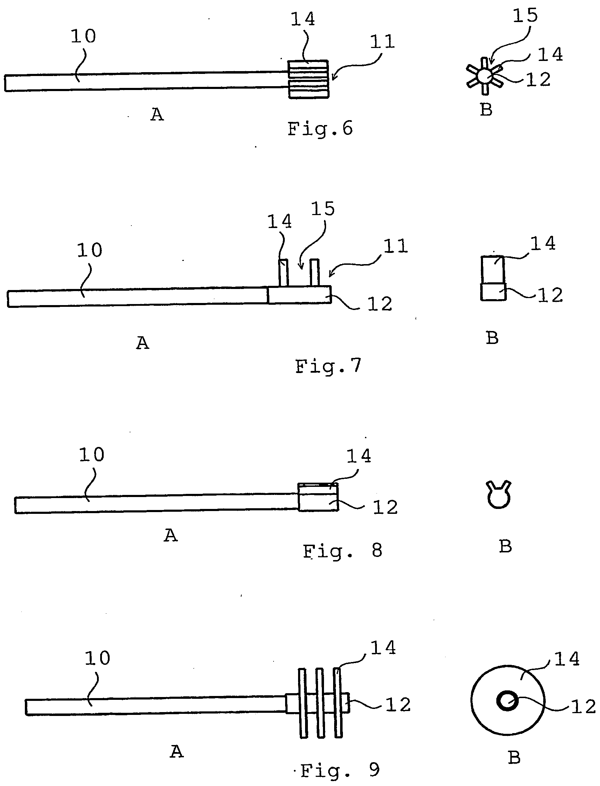

Bei dem Auftrageinstrument der Fig. 6 ist die Tragestruktur 12 zylinderförmig und die Höhenausdehnung der Vorsprünge 14 erstreckt sich in Radialrichtung von der Tragestruktur 12. Die Breitenausdehnung der Vorsprünge 14 ist parallel zum Schaft 10 ausgerichtet. Die Dentalmasse kann durch Drehen des Auftrageinstruments um die Achse des Schafts 10 auf die Wand einer Bohrung aufgebracht werden.

Bei der in Fig. 7 gezeigten Ausführungsform sind lediglich zwei Vorsprünge 14 mit einem dazwischen liegenden Aufnahmeraum 15 vorgesehen. Die Tragestruktur 12 hat eine flächige Gestalt in der Form eines Rechtecks. Die Höhenausdehnung und die Breitenausdehnung der Vorsprünge 14 erstreckt sich quer zur Richtung des Schafts 10. Der Abstand der Vorsprünge 14 zueinander ist fast so groß wie die Höhenausdehnung der Vorsprünge 14. Der dadurch gebildete Aufnahmeraum 15 ist zur Aufnahme eher zähflüssiger Dentalmassen geeignet.

Bei der Ausführungsform der Fig. 8 ist die Tragestruktur 12 zylinderförmig. Die Höhenausdehnung der Vorsprünge 14 ist radial ausgerichtet, die Breitenausdehnung parallel zur Richtung des Schafts 10. Das Auftrageinstrument ist als Spritzgussteil aus einem einzigen Material hergestellt. Die im Vergleich zur Tragestruktur 12 verminderte Steifigkeit der Vorsprünge 14 wird dadurch erreicht, dass die Vorsprünge 14 eine sehr geringe Materialstärke haben.

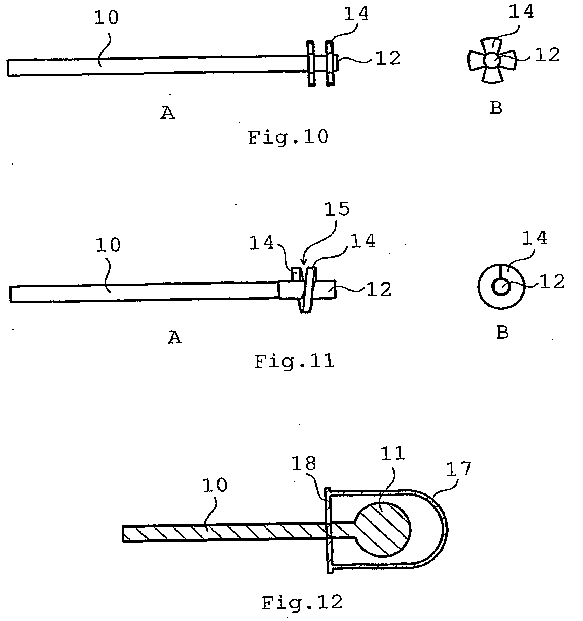

In Fig. 9 erstrecken sich die Vorsprünge 14 kreisförmig um die zylinderförmige Tragestruktur 12. Die Vorsprünge 14 sind parallel zueinander angeordnet und erstrecken sich in ihrer Höhenausdehnung radial von der Tragestruktur 12. Bei der Ausführungsform der Fig. 10 sind die Vorsprünge nicht in Form von geschlossenen, sondern in Form von durchbrochenen Kreisen ausgebildet. In Fig. 11 sind zwei einen Aufnahmeraum 15 begrenzende Vorsprünge spiralförmig miteinander verbunden.

In Fig. 12 ist eine Auftrageeinheit gezeigt, die ein erfindungsgemäßes Auftrageinstrument und einen mit Dentalmasse gefüllten Behälter 17 umfasst. Das Auftrageinstrument ist schematisch dargestellt, wobei eine kugelförmige Kontur des Instrumentenkopfs 11 angedeutet ist. Der Schaft 10 des Auftrageinstruments erstreckt sich durch einen Deckel 18 des Behälters 17. Nach dem Öffnen des Behälters 17 kann das Auftrageinstrument entnommen werden, wobei die Aufnahmefächer mit Dentalmasse gefüllt sind. Da das Auftrageinstrument entweder aus einem einheitlichen Material oder aus mehreren stoffschlüssig miteinander verbundenen Materialien besteht, wird es durch aggressive Bestandteile der Dentalmasse nicht angegriffen.

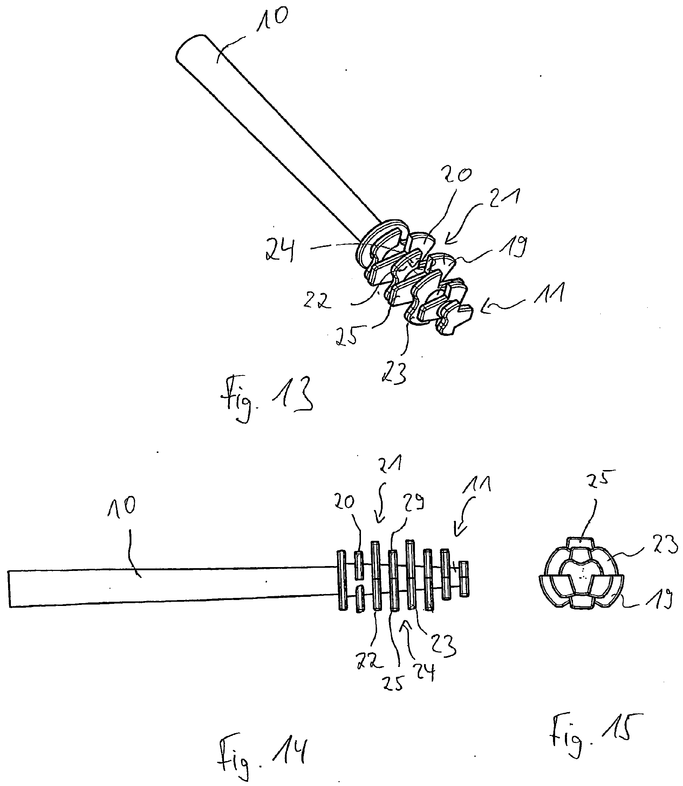

Die Figuren 13 bis 15 zeigen verschiedene Ansichten einer Ausführungsform der Erfindung, bei der die Aufnahmeräume zueinander versetzt angeordnet sind. So sind auf der einen Seite des Auftrageinstruments zwei Vorsprünge 19, 20 ausgebildet, die einen Aufnahmeraum 21 zwischen sich einschließen. Auf der anderen Seite des Auftrageinstruments sind zwei Vorsprünge 22, 23 ausgebildet, die einen Aufnahmeraum 24 zwischen sich einschließen. Die Aufnahmeräume 21, 24 sind derart zueinander versetzt, dass der Vorsprung 19 in der seitlichen Verlängerung des Aufnahmeraums 24 angeordnet ist. Umgekehrt ist der Vorsprung 22 in der seitlichen Verlängerung des Aufnahmeraums 21 angeordnet. Diese Kombination versetzt zueinander angeordneter Aufnahmeräume wiederholt sich mehrfach über die Länge des Instrumentenkopfs 11. In ihrer Summe erstrecken sich die Aufnahmeräume 21, 24 rund um die zentrale Tragestruktur herum. In Projektion betrachtet schließen die Vorsprünge 19, 20 des ersten Aufnahmeraums 21 mit den Vorsprüngen 22, 23 des zweiten Aufnahmeraums 24 ab.

In dem Aufnahmeraum 24 ist ein Zwischenvorsprung 25 ausgebildet, dessen Flächenausdehnung kleiner ist als die Flächenausdehnung der Vorsprünge 22, 23. Allerdings springt der Zwischenvorsprung 25 in Radialrichtung weiter vor als die Vorsprünge 22, 23. Bei dieser Ausführungsform sind es am Beispiel des Aufnahmeraums 24 nicht lediglich die angrenzenden Vorsprünge 22, 23, durch die die Dentalmasse im Aufnahmeraum 24 gehalten wird. Vielmehr trägt auch der in der seitlichen Verlängerung des Aufnahmeraums 24 liegende Vorsprung 19 dazu bei, die Dentalmasse zu halten. Der Halt der Dentalmasse wird weiter unterstützt durch den im Zentrum des Aufnahmeraums 24 angeordneten Zwischenvorsprung 25. Der Instrumentenkopf 11 hat bezogen auf das von den Vorsprüngen aufgespannte Volumen ein hohes Aufnahmevermögen für Dentalmasse.

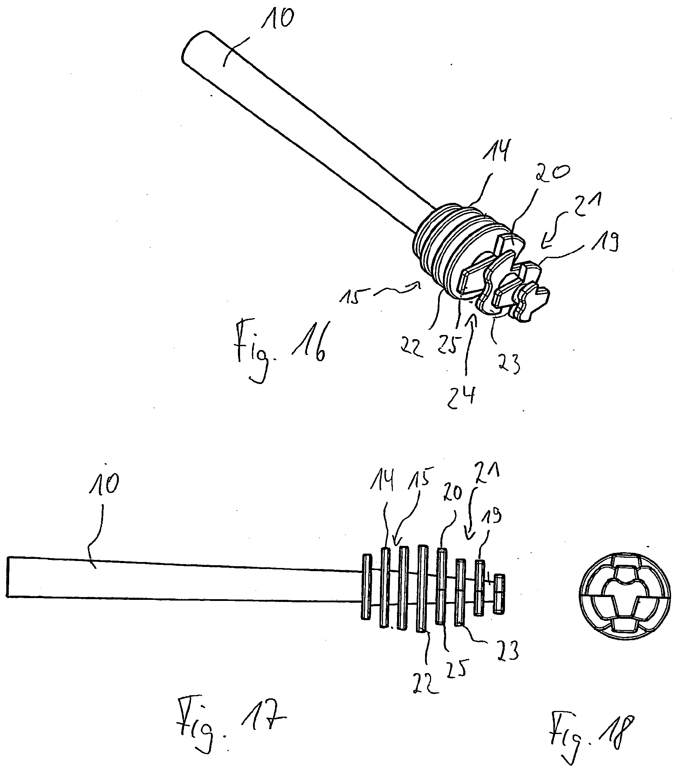

Bei der Ausführungsform der Figuren 16 bis 18 sind im hinteren Bereich Vorsprünge 14 ausgebildet, die sich rund um die zentrale Tragestruktur herum erstrecken. Zwischen sich schließen die Vorsprünge 14 Aufnahmeräume 15 ein. Im vorderen Bereich sind Aufnahmeräume 21, 24 ausgebildet, die zueinander versetzt sind. Durch die versetzten Aufnahmeräume 21, 24 wird erreicht, dass bezogen auf das von dem Instrumentenkopf aufgespannte Volumen ein hohes Aufnahmevermögen für die Dentalmasse besteht.

## Patentansprüche

1. Auftrageinstrument zum Auftragen von Dentalmassen, mit einem als Griffteil ausgebildeten Schaft (10) und mit einem Instrumentenkopf (11), der eine Tragestruktur (12) sowie eine Mehrzahl von an der Tragestruktur (11) ausgebildeten Vorsprüngen (14, 19, 20, 22, 23) umfasst, wobei die Vorsprünge (14, 19, 20, 22, 23) elastisch sind und bezogen auf eine Höhenausdehnung eine geringere Steifigkeit haben als die Tragestruktur (12) und wobei die Vorsprünge (14, 19, 20, 22, 23) einen Aufnahmeraum (15, 21, 24) für die Dentalmasse zwischen sich einschließen, wobei der Aufnahmeraum ohne weitere Abgrenzung in die Umgebung übergeht, wobei die Vorsprünge (14, 19, 20, 22, 23) eine flächige Gestalt haben, wobei die Vorsprünge bezogen auf eine Breitenausdehnung im Wesentlichen parallel zueinander angeordnet sind, wobei der größte Durchmesser des Instrumentenkopfs (11) zwischen 2 mm und 3 mm liegt.

2. Auftrageinstrument nach Anspruch 1, wobei mehr als zwei flächige Vorsprünge (14, 19, 20, 22, 23) vorgesehen sind, die bezogen auf ihre Breitenausdehnung im Wesentlichen parallel zueinander angeordnet sind.

3. Auftrageinstrument nach Anspruch 1 oder 2, wobei die Aufnahmeräume (15, 21, 24) bezogen auf das von dem Instrumentenkopf (11) aufgespannte Volumen mindestens 40%, weiter mindestens 60% einnehmen.

4. Auftrageinstrument nach einem der Ansprüche 1 bis 3, wobei ein erster Aufnahmeraum (21) und ein zweiter Aufnahmeraum (24) derart zueinander versetzt angeordnet sein, dass ein Vorsprung (19) des ersten Aufnahmeraums (24) in der seitlichen Verlängerung des zweiten Aufnahmeraums (21) angeordnet ist.

5. Auftrageinstrument nach Anspruch 4, wobei in Projektion betrachtet die Vorsprünge (19, 20) des ersten Aufnahmeraums (21) mit den Vorsprüngen (22, 23) des zweiten Aufnahmeraums (24) abschließen.

6. Auftrageinstrument nach einem der Ansprüche 1 bis 5, wobei innerhalb eines Aufnahmeraums (21, 24) ein Zwischenvorsprung (25) angeordnet ist, dessen Flächenausdehnung klein ist verglichen mit der Flächenausdehnung benachbarter Vorsprünge (19, 20, 22, 23).

7. Auftrageinstrument nach Anspruch 6, wobei der Zwischenvorsprung (15) in radialer Richtung weiter vorspringt als benachbarte Vorsprünge (19, 20, 22, 23).

8. Auftrageinstrument nach einem der Ansprüche 1 bis 7, wobei die Höhenausdehnung der flächigen Vorsprünge (14, 19, 20, 22, 23) sich im Wesentlichen quer zur Richtung des Schafts (10) erstreckt.

9. Auftrageinstrument nach einem der Ansprüche 1 bis 8, wobei die Tragestruktur (12) eine flächige Gestalt hat.

10. Auftrageinstrument nach einem der Ansprüche 1 bis 9, wobei der Instrumentenkopf (11) eine annähernd kugelförmige Kontur hat.

11. Auftrageinstrument nach einem der Ansprüche 1 bis 10, wobei die Vorsprünge (14, 19, 20, 22, 23) sich in ihrer Breitenausdehnung quer zur Richtung des Schafts (10) erstrecken und dass die Vorsprünge (14) eine in Richtung eines distalen Endes des Schafts (10) weisende Wölbung aufweisen.

12. Auftrageinstrument nach einem der Ansprüche 1 bis 11, wobei es aus mehr als einem Material gefertigt ist und dass die Materialien stoffschlüssig miteinander verbunden sind.

13. Auftrageeinheit, umfassend einen mit einer Dentalmasse gefüllten Behälter (17) und ein Auftrageinstrument gemäß einem der Ansprüche 1 bis 11, wobei das Auftrageinstrument mit dem Behälter (17) verbunden ist und dass der Instrumentenkopf (11) in die Dentalmasse eingetaucht ist.

## Claims

1. Applicator instrument for applying dental compounds, with a shaft (10) designed as a grip part and with an instrument head (11) that comprises a support structure (12) and a plurality of projections (14, 19, 20, 22, 23) formed on the support structure (11), which projections (14, 19, 20, 22, 23) are elastic and, in relation to a height extent, have less stiffness than the support structure (12), and which projections (14, 19, 20, 22, 23) between them enclose a receiving space (15, 21, 24) for the dental compound, wherein the receiving space opens without further restriction into the surrounding environment, wherein the projections (14, 19, 20, 22, 23) have a planar configuration, and wherein, in relation to a width extent, the projections are arranged substantially parallel to one another, with the greatest diameter of the instrument head (11) being between 2 mm and 3 mm.

2. Applicator instrument according to Claim 1, wherein more than two planar projections (14, 19, 20, 22, 23) are provided which, in relation to their width extent, are arranged substantially parallel to one another.

3. Applicator instrument according to Claim 1 or 2, wherein, in relation to the volume encompassed by the instrument head (11), the receiving spaces (15, 21, 24) take up at least 40%, further at least 60%.

4. Applicator instrument according to one of Claims 1 to 3, wherein a first receiving space (21) and a second receiving space (24) are offset relative to each other in such a way that a projection (19) of the first receiving space (24) is arranged in the lateral continuation of the second receiving space (21).

5. Applicator instrument according to Claim 4, wherein, seen in a projected view, the projections (19, 20) of the first receiving space (21) terminate with the projections (22, 23) of the second receiving space (24).

6. Applicator instrument according to one of Claims 1 to 5, wherein, arranged inside a receiving space (21, 24), there is an intermediate projection (25), the surface area of which is small compared to the surface area of adjacent projections (19, 20, 22, 23).

7. Applicator instrument according to Claim 6, wherein the intermediate projection (15) projects further in the radial direction than do adjacent projections (19, 20, 22, 23).

8. Applicator instrument according to one of Claims 1 to 7, wherein the height extent of the planar projections (14, 19, 20, 22, 23) runs substantially transverse to the direction of the shaft (10).

9. Applicator instrument according to one of Claims 1 to 8, wherein the support structure (12) has a planar configuration.

10. Applicator instrument according to one of Claims 1 to 9, wherein the instrument head (11) has an approximately spherical contour.

11. Applicator instrument according to one of Claims 1 to 10, wherein the projections (14, 19, 20, 22, 23), in their width extent, run transverse to the direction of the shaft (10), and in that the projections (14) have a convexity pointing in the direction of a distal end of the shaft (10).

12. Applicator instrument according to one of Claims 1 to 11, wherein it is made from more than one material, and in that the materials are cohesively interconnected.

13. Applicator unit, comprising a container (17), filled with a dental compound, and an applicator instrument according to one of Claims 1 to 11, wherein the applicator instrument is connected to the container (17), and in that the instrument head (11) is immersed in the dental compound.

## Revendications

1. Instrument d'application pour l'application de masses dentaires, avec une tige (10) conçue comme une partie de poignée et avec une tête d'instrument (11), qui comporte une structure porteuse (12) ainsi qu'une pluralité de saillies (14, 19, 20, 22, 23) réalisées sur la structure porteuse (12), les saillies (14, 19, 20, 22, 23) étant élastiques et présentant, sur une extension en hauteur, une rigidité plus faible que la structure porteuse (12) et les saillies (14, 19, 20, 22, 23) formant entre elles un espace de logement (15, 21, 24) pour la masse dentaire, l'espace de logement débouchant, sans autre limitation, dans l'environnement, les saillies (14, 19, 20, 22, 23) ayant une forme plate, les saillies étant disposées de manière globalement parallèle entre elles sur une extension en largeur, le diamètre le plus grand de la tête de l'instrument (11) étant entre 2 mm et 3 mm.

2. Instrument d'application selon la revendication 1, plus de deux saillies plates (14, 19, 20, 22, 23) étant prévues, qui sont disposées de manière globalement parallèles entre elles sur leur extension en largeur.

3. Instrument d'application selon la revendication 1 ou 2, les espaces de logement (15, 21, 24) représentent, par rapport au volume occupé par la tête de l'instrument (11), au moins 40%, de préférence au moins 60%.

4. Instrument d'application selon l'une des revendications 1 à 3, un premier espace de logement (21) et un deuxième espace de logement (24) étant disposés de manière décalée entre eux de façon à ce qu'une saillie (19) du premier espace de logement (24) est disposée dans le prolongement latérale du deuxième espace de logement (21).

5. Instrument d'application selon la revendication 4, les saillies (19, 20) du premier espace de logement (21) se terminant, vues en projection, avec les saillies (22, 23) du deuxième espace de logement (24).

6. Instrument d'application selon l'une des revendications 1 à 5, une saillie intermédiaire (25) étant disposée à l'intérieur d'un espace de logement (21, 24), dont l'extension de la surface est faible comparée à l'extension de surface de saillies adjacentes (19, 20, 22, 23).

7. Instrument d'application selon la revendication 6, la saillie intermédiaire (15) dépassant plus loin dans la direction radiale que des saillies adjacentes (19, 20, 22, 23).

8. Instrument d'application selon l'une des revendications 1 à 7, l'extension en hauteur des saillies plates (14, 19, 20, 22, 23) s'étend transversalement par rapport à la direction de la tige (10).

9. Instrument d'application selon l'une des revendications 1 à 8, la structure porteuse (12) ayant une forme plate.

10. Instrument d'application selon l'une des revendications 1 à 9, la tête de l'instrument (11) ayant un contour approximativement sphérique.

11. Instrument d'application selon l'une des revendications 1 à 10, les saillies (14, 19, 20, 22, 23) s'étendant dans leur extension en largeur transversalement par rapport à la direction de la tige (10) et en ce que les saillies (14) présentent une courbure orientée en direction d'une extrémité distale de la tige (10).

12. Instrument d'application selon l'une des revendications 1 à 11, celui-ci étant constitué de plus d'un matériau et en ce que les matériaux sont reliés entre eux par liaison de matière.

13. Unité d'application comprenant un récipient (17) rempli d'une masse dentaire et un instrument d'application selon l'une des revendications 1 à 11, l'instrument d'application étant relié avec le récipient (17) et en ce que la tête de l'instrument (11) est plongée dans la masse dentaire.
